# EUROPEAN PATENT APPLICATION

(11) **EP 1 462 926 A2**
(43) Date of publication of application: **29.09.2004**
(21) Application number: 04251570.0
(22) Date of filing: 18.03.2004
(51) Int. Cl.: G06F 3/033

(54) **Magnetic sensor- based handheld input system and a handwriting trajectory recovery method therefor**

(30) Priority: 19.03.2003 KR 2003017143
(71) Applicant: Samsung Electronics Co., Ltd., Suwon-si, Gyeonggi-do 442-742 (KR)
(72) Inventor: Roh, Kyoung-sig, c/o114-704 Sibum Danji Hansin, Sungnam-si, Gyeonggi-do (KR); Bang, Won-chul, Sungnam-si, Gyeonggi-do (KR); Kim, Dong-yoon, c/o 103-207 Doosan Apt., Seoul (KR); Chang, Wook, c/o 5-701 Samik Apt., Seoul (KR); Kang, Kyoung-ho, c/o 305-105 Jugong Greenbill, Yongin-si, Gyeonggi-do (KR); Choi, Eun-seok, c/o Na-101 Seocho Villa, Seoul (KR)
(74) Representative: Ertl, Nicholas Justin

(57) **Abstract**

A pen-shaped input system is designed to recover handwriting trajectory in space by using a magnetic field sensor. The system detects a tilt angle relative to the geomagnetic field from a magnetic field detection unit and an acceleration detection unit, and respective three-dimensional axial direction accelerations based on movements of the pen, and calculates the absolute coordinates of the pen. Further, the system converts the acceleration measurement values of the pen into a pen tip acceleration value, and applies the acceleration value for recovering handwriting trajectory of the pen. Such a pen-shaped input system uses the magnetic sensor so that it can prevent accumulative errors occurring due to integrations of the detected information when using inertia sensors, and the system can improve a processing speed since its signal processing is simplified.

## Description

Apparatuses and methods consistent with the present invention relate to a pen-shaped input system, and more particularly, to a pen-shaped input system and a handwriting trajectory recovery method that are designed to recover handwriting strokes on the two-dimensional plane or in the three-dimensional space.

Recently, the markets for personal mobile devices such as PDAs, cellular phones, notebooks, and so on, have widely spread. It can be stated that such personal mobile devices are fit for ubiquitous environments, allowing information utilization anytime and anywhere since they are easy to carry. That is, recent mobile devices are designed to enable users to utilize information while on the move, greatly changing the existing paradigm, unlike the past environments where information utilization was confined to desktop personal computers (PCs) installed at homes.

However, such mobile devices are easy to carry, but are smaller in an overall size, which causes a problem that users feel somewhat inconvenient in recognizing information through a display unit and inputting commands. Moreover, the display screen size of a portable terminal is being gradually reduced as the portable terminal is gradually reduced to a watch-shaped or a wallet-shaped terminal, so that the existing information input method cannot but have limitations. In such mobile devices, being easy to carry runs counter to being easy to input information, so research and development have been continuously made on methods for overcoming the problems.

As a result of such research, diverse devices have been proposed that can solve information input problems by using a single electronic pen only on a general plane without a physical tablet. Pen-shaped input devices currently commercialized or in research and development can be generally classified into two kinds. The first kind measures coordinates of a pen tip outside the pen, and the second kind measures pen movements inside the pen.

For the kinds that measures the coordinates of the pen tip outside the pen, there exist a type for using triangulation, a type for using electromagnetic waves or ultrasonic waves, a type for using the ultrasonic waves and acceleration sensors in combination, and so on. However, the kinds that measures the coordinates of the pen tip outside the pen have a problem of increased cost and inconvenience in carrying since extra sensors are needed to externally detect pen movements.

In the meantime, for the kind that measures the coordinates of the pen tip inside the pen, there exist a type for using the rotations of a ball mounted on the pen tip, and a type for using measured force exerted on the pen. However, these types have a drawback in that pen movements cannot be detected if a pen is not in contact with the two-dimensional plane.

Further, for the kind that measures the coordinates of the pen tip inside the pen, there exists another type that obtains pen movements by using 2-axis or 3-axis acceleration sensors mounted inside the pen. However, this type has a problem of high possibility of errors due to influences of central axis tilting not being considered since this type mounts the acceleration sensors on the central portion of the pen rather than on the pen tip. Further, in calculating position movements through the double integral for acceleration signals, there exists a problem of difficulties in measuring precise movements since accumulative errors increase as time lapses.

In order to solve the problem of pen tilting angles based on the positions at which the sensor is mounted, United States Patent No. 5,434,371(issued July 18, 1995) discloses an approach that moves 2- or 3 -axis acceleration sensors to the pen tip and a signal processor to the upper portion of the pen. However, the approach disclosed in U.S. Patent No. 5,434,371 has a problem in that it is greatly affected by electrical noise and ink cannot be mounted in the pen tip portion since the sensor and the signal processor are separated. Further, U.S. Patent No. 6,181,329 (issued January 30, 2001) discloses an approach for obtaining positions of the pen in general three-dimensional movements with 3-axis acceleration sensors and 3-axis gyro sensors built in the pen. However, the U.S. Patent No. 6,181,329 recovers handwritings based on the sensor-mounted position rather than the pen tip for the recognition position, so that it has difficulties in precise recovery due to noise and the like.

The above systems for recovering users' handwritings by using inertia measurement values such as acceleration information generally employ theories for the Inertial Navigation System (INS) widely used in military and navigation fields. The INS calculates navigation information such as positions, velocities, attitudes, and so on, for objects moving in the three-dimensional space by using inertia measurement values. Theoretically, the strapdown INS (SDINS) can obtain necessary information on objects of three-dimensional movements only with 3-axis accelerations and 3-axis angular velocities. The SDINS calculates the attitudes of the system and compensates for accelerations by using integral values for angular velocity measurement values, calculates velocities by integrating the compensated accelerations once, and calculates position information by integrating the accelerations twice.

However, in obtaining positions and angles through the double integral of accelerations and the integral of angular velocities with the inertial navigation method applied, there exist difficulties in calculating precise three-dimensional movements since accumulative errors due to noise or drift of signals outputted from the sensors increase in proportion to the square of time in the case of the accelerometer and in proportion to time in the case of the angular velocity meter.

According to the invention, there is provided a pen-shaped input system comprising a magnetic field detection unit mounted in a pen-shaped body of the system, for detecting a tilt angle of the body based on movements of the pen-shaped body; an acceleration detection unit mounted in the pen-shaped body, for detecting respective axial directions of the three-dimensional movements of the pen-shaped body; and a control unit for calculating absolute coordinates of the movements of the pen-shaped body from the information measured through the magnetic field detection unit and the acceleration detection unit.

The invention thus provides a pen-shaped input system that can precisely track handwriting on a two-dimensional plane or in three-dimensional space with accumulative errors due to inertia sensors reduced.

The control unit converts 3-axis acceleration measurement values detected from the acceleration detection unit into measurement values of the pen-shaped body, and applies the converted measurement values of the pen tip for the absolute coordinate calculation.

Further, the pen-shaped input system further comprises a communication module for transmitting data to external computing devices, wherein the control unit controls the communication module to transmit the information measured from the magnetic field detection unit and the acceleration detection unit to the external computing devices.

The invention also provides a coordinate measurement method for a pen-shaped input system comprising steps of detecting a tilt angle and respective three-dimensional axial direction accelerations based on movements of a pen-shaped body of the system from a magnetic field detection unit and an acceleration detection unit mounted in the pen-shaped body; and calculating absolute coordinates of the pen-shaped body from the information detected through the magnetic field detection unit and the acceleration detection unit.

Further, the coordinate measurement method further comprises a step of converting the 3-axial acceleration measurement values detected from acceleration sensors into an acceleration value of the pen tip of the pen-shaped body, wherein the step of calculating the coordinates of the pen-shaped body calculates the coordinates of the pen-shaped body with the acceleration value of the pen tip applied.

Further, the coordinate measurement method further comprises a step of transmitting the information measured from the magnetic field detection unit and the acceleration detection unit into the external computing devices.

As aforementioned, the pen-shaped input system and the coordinate measurement method therefor according to the present invention can obtain absolute coordinate values as tilt angles are precisely measured through a magnetic sensor, so as to enhance the precision degree for pen movement tracking, and the system and method according to the present invention can prevent conventional accumulative errors occurring as acceleration signals are integrated, so as to perform signal processing operations faster.

The invention will be described in detail with reference to the following drawings in which like reference numerals refer to like elements, and wherein:
Fig. 1 is a schematic block diagram for showing a pen-shaped input system according to an embodiment of the present invention;
Fig. 2 is a view for showing a schematic structure of the pen-shaped input system of Fig. 1; and
Fig. 3 is a view for explaining signal processing operations of the pen-shaped input system of Fig. 2.

Hereinafter, the present invention will be described in detail with reference to the accompanying drawings.

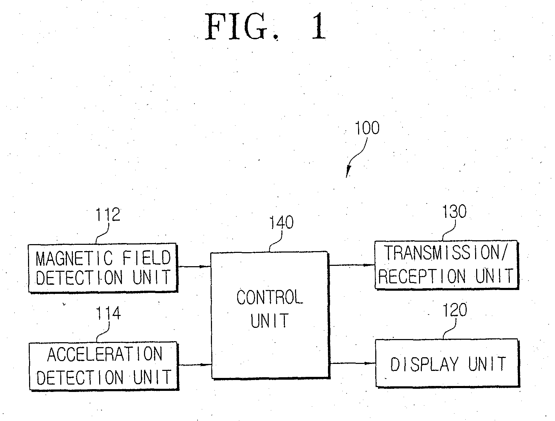

Fig. 1 is a schematic block diagram for showing a pen-shaped input system according to an embodiment of the present invention. A system 100 includes a magnetic field detection unit 112, an acceleration detection unit 114, a display unit 120, a transmission/reception unit 130, and a control unit 140.

The magnetic field detection unit 112 uses a magnetic field detection sensor, and detects a tilt angle of a pen-shaped body or a slender handheld body of the pen-shaped input system based on attitude changes of the body according to the motions of the pen body.

The acceleration detection unit 114 detects respective three-dimensional axial accelerations based on the movements of the pen-shaped body.

The display unit 120 displays the motions of the pen-shaped body, that is, handwriting trajectory on a screen. Here, the display unit 120 may be built in the pen-shaped input system into one body, or may be a displayable unit built in other systems.

The transmission/reception unit 130 transmits to the other systems tilt angle information and acceleration information measured through the magnetic field detection unit 112 and the acceleration detection unit 114 under the controls of the control unit 140.

The control unit 140 calculates absolute coordinates of the pen body based on the tilt angle information and the acceleration information based on the movements of the pen-shaped body, and controls the display unit 120 to display handwriting trajectory performed in space or the transmission/reception unit 130 to transmit handwriting trajectory information to the other systems. At this time, the control unit 140 converts the acceleration information detected through the acceleration sensors into measurement values of a pen tip of the body, and applies the measurement values of the pen tip for absolute coordinate calculations. Further, the control unit 140 may not process the information detected from the magnetic field detection unit 112 and the acceleration detection unit 114 inside the pen body, but only transfers the information to an external system performing a computing process through the transmission/reception unit 130. At this time, the external system performs the computing process for the control unit 140.

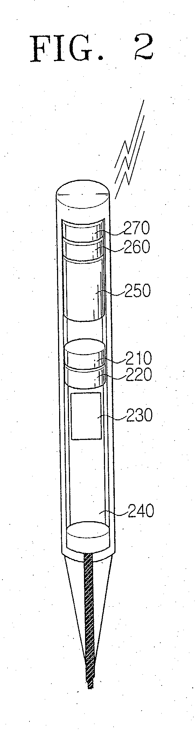

Fig. 2 is a view for showing a schematic structure of the pen-shaped input system of Fig. 1. The system has a magnetic field detection sensor 210, an acceleration detection sensor 220, a computing processor 230, a Main Control Unit (MCU) 240, a battery 250, a data storage 260, and a communication module 270. Here, the arrangement for the respective components of the system is not limited to Fig. 2, but can be made in diverse structures. Further, the computing processor 230 and the data storage 260 may be built in the MCU 240. Further, even though not shown in Fig. 2, devices such as LEDs and speakers may be further mounted to indicate system states, and a LCD may be mounted to display a recovering status or the like for handwriting trajectory in space.

In order to grasp relative positions of the pen-shaped input system with respect to the absolute coordinate system in the three-dimensional space, the attitude of the system has to be calculated, and the acceleration measurement values of the pen-shaped body have to be converted into the measurement values in the absolute coordinates. Since the attitude of an object in the three-dimensional space is expressed in Euler angles, that is, in roll, pitch, and yaw, and the absolute coordinates of an object can be obtained by applying a tilt angle detected through the magnetic field sensor 210 from the attitude of an object obtained through the Euler angles. At this time, the detection position of the acceleration detection sensor 220 is the middle portion of the pen, so that conversions can be made into an acceleration value at the pen tip by using a distance to the pen tip from the detection position.

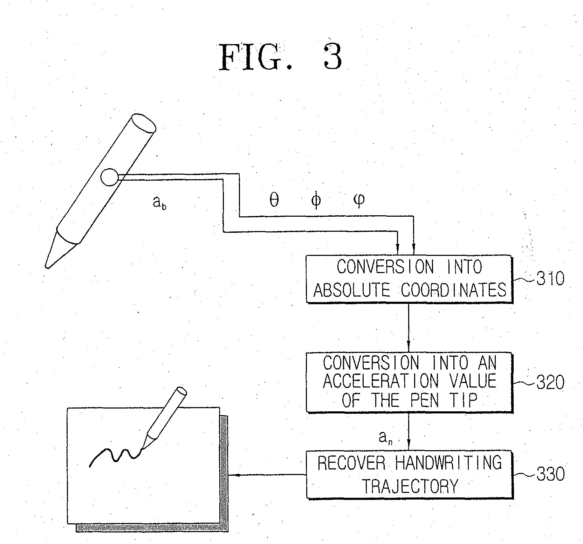

Fig. 3 is a view for explaining handwriting trajectory recovery operations for the pen-shaped input system of Fig. 2. First, in the pen-shaped input system, if pen movements occur, the acceleration detection sensor 220 measures and outputs to electrical signals respective accelerations in x-, y-, and z-axis directions, the magnetic field detection sensor 210 detects a tilt angle of the pen based on the geomagnetic field and outputs an electrical signal. Thereafter, the computing processor 230 converts into absolute coordinates of the pen based on the acceleration information and the tilt angle information transferred from the respective sensors 210 and 220 (310). Next, the computing processor 230 converts an acceleration value of the measured absolute coordinates into an acceleration value of the pen tip (320), so that handwriting trajectory can be restored with the acceleration value of the pen tip applied (330).

As stated above, the pen-shaped input system and the handwriting trajectory recovery method use a magnetic field sensor, so that accumulative errors occurring due to the integral in the system using inertia sensors can be prevented, and absolute values are obtained through a tilt angle, so that the processing speed can be enhanced since the signal processing is simplified.

Further, the present invention can solve a problem of inconvenient input operations in small-sized devices, and the present invention provides an intuitive interface so as to enable users to use an input system without specific learning courses, promoting users' convenience.

While the invention has been shown and described with reference to a certain exemplary embodiment thereof, it will be understood by those skilled in the art that various changes in form and details may be made therein without departing from the scope of the invention as defined by the appended claims.

## Claims

1. A handheld input system using a magnetic sensor, comprising:
a magnetic field detection unit mounted in a handheld body, for detecting a tilt angle of the handheld body based on a movement of the handheld body;
an acceleration detection unit mounted in the handheld body, for detecting respective axial direction accelerations of the movement of the handheld body; and
a control unit for calculating absolute coordinates of the movement of the handheld body from the tilt angle measured at the magnetic field detection unit and the acceleration measured at the acceleration detection unit.

2. The system as claimed in claim 1, comprising a pen-shaped input system, wherein the handheld body is a pen-shaped body.

3. The system as claimed in claim 2, wherein the control unit converts 3-axis acceleration measurement values detected at the acceleration detection unit into measurement values of a pen tip of the pen-shaped body to generate converted measurement values, and applies the converted measurement values of the pen tip for calculating absolute coordinates.

4. The system as claimed in any preceding claim, further comprising a communication module for transmitting data to an external computing device,
wherein the control unit controls the communication module to transmit the tilt angle detected at the magnetic field detection unit and the acceleration detected at the acceleration detection unit to the external computing device.

5. A coordinate measurement method for a handheld input system, comprising steps of:
detecting a tilt angle and three-dimensional axial direction, an acceleration based on a movement of a handheld body at a magnetic field detection unit and an acceleration detection unit, respectively, wherein the magnetic field detection unit and the acceleration detection unit are mounted in the handheld body; and
calculating absolute coordinates of the handheld body from the tilt angle detected at the magnetic field detection unit and the acceleration detected at the acceleration detection unit.

6. The method as claimed in claim 5 for a pen-shaped input system, the handheld body comprising a pen-shaped body.

7. The method as claimed in claim 6, further comprising converting 3-axial acceleration measurement values detected at the acceleration detection unit into an acceleration value of a pen tip of the pen-shaped body, wherein the operation of calculating the absolute coordinates of the pen-shaped body calculates the absolute coordinates of the pen-shaped body with the acceleration value of the pen tip.

8. The method as claimed in claim 5, 6 or 7, further comprising transmitting the tilt angle detected at the magnetic field detection unit and the acceleration detected at the acceleration detection unit to an external computing device.
